# FASCICULE DE BREVET EUROPEEN

(11) **EP 2 317 175 B1**
(45) Date de publication et mention de la délivrance du brevet: **18.03.2020**
(21) Numéro de dépôt: 10188311.4
(22) Date de dépôt: 21.10.2010
(51) Int. Cl.: F16G 11/14, A62B 35/00, A62B 1/04, A62B 35/04

(54) **Dispositif de façonnage d'une boucle sur un câble et absorbeur-tendeur pour ligne de vie comportant un tel dispositif**
Vorrichtung zur Formung einer Kabelschleife und Absorber-Spannvorrichtung für eine Rettungsleine, die eine solche Vorrichtung umfasst
Device for forming a loop on a cable and absorber-tensioner for a life-line comprising such a device

(30) Priorité: 28.10.2009 FR 0957548
(43) Date de publication de la demande: 04.05.2011
(73) Titulaire: Ateliers LR Etanco, 78230 Le Pecq (FR)
(72) Inventeur: Figueiredo, Jérémy, 78230, Le Pecq (FR); Leroy, Alain, 78820, Juziers (FR)
(74) Mandataire: Mazabraud, Xavier

(56) Documents cités:
- DE-U1- 20 200 805
- FR-A1- 2 857 270
- US-A- 3 357 520
- US-A- 5 408 729
- US-A- 5 957 432

## Description

L'invention concerne le domaine des lignes de vie, mises en place notamment en vue de travaux à effectuer en altitude. Plus particulièrement, elle concerne un dispositif de façonnage semi-automatique d'une boucle sur un câble en vue de la mise en place d'une ligne de vie.

Une ligne de vie est un câble ou une corde installé entre deux points fixes élevés d'une structure comportant généralement un absorbeur de charge et un tendeur. Les personnes amenées à travailler sur cette structure, par exemple un toit, portent un harnais auquel est reliée une longe, et s'accrochent sur la ligne de vie par le biais d'un mousqueton ; elles restent ainsi relativement libres de leurs mouvements et conservent l'usage de leurs deux mains. En cas de chute, le pré-tensionnement imprimée au câble fait que la personne chute d'une faible hauteur et l'absorbeur absorbe l'énergie cinétique due à la chute de façon à lui éviter un choc trop brutal. Il s'agit d'un équipement indispensable et réglementaire pour conduire des travaux en altitude en toute sécurité. Il importe que la ligne de vie puisse être mise en place le plus facilement possible car, par hypothèse, la personne qui la met en place n'en bénéficie pas encore.

Une ligne de vie comporte un câble comprenant une boucle à chaque extrémité, cette boucle étant rigidifiée par une cosse coeur et étant assurée par des serre câbles, dont le nombre, l'orientation et l'écartement sont déterminés par la réglementation. L'une de ces boucles peut être façonnée sur le câble avant l'installation de la ligne de vie mais la seconde doit être réalisée sur place. En effet, il est en pratique impossible de déterminer avec suffisamment de précision la longueur de câble nécessaire entre les deux boucles d'extrémité.

En pratique, l'installation d'une ligne de vie nécessite deux opérateurs :
- un premier opérateur relie un absorbeur de charge à un point fixe de la structure et relie la boucle du câble à l'absorbeur par l'intermédiaire par exemple d'une manille,
- un second opérateur relie un tendeur à un autre point fixe de la structure et doit relier ce tendeur à l'autre extrémité du câble, ce qui nécessite de façonner sur place une seconde boucle à cette autre extrémité du câble. En effet, on ne peut déterminer à l'avance avec suffisamment de précision la longueur de câble nécessaire entre les deux boucles. Or le façonnage d'une boucle sur un câble, comprenant le montage d'une cosse coeur, est en soi une tâche ardue compte tenu notamment de la rigidité du câble. De plus, l'opérateur doit assurer lui même le pré-tensionnement du câble en le reliant au tendeur.

Si un opérateur effectue seul ces deux opérations, cela lui impose d'effectuer des allers - retours entre les deux points fixes, ce qui est dangereux.

De plus, comme il a été mentionné plus haut, la réglementation impose de respecter des distances minimales entre serre câbles lors du façonnage classique d'une boucle avec une cosse coeur (par exemple 60 cm). Cette longueur le câble est neutralisée pour un futur utilisateur à chaque extrémité car les serre câbles gênent ou bloquent le passage des mousquetons. De plus, compte tenu de cette longueur de câble neutralisée, l'utilisateur ne peut plus s'accrocher aux points fixes de la structure.

Par ailleurs, ce mode d'installation d'une ligne de vie nécessite un grand nombre d'outils et de petites pièces, ce qui représente une difficulté à cause de l'encombrement et des risques de perte et/ou de chute de ces pièces.

En conclusion, la mise en place d'une ligne de vie avec des dispositifs classiques est une tâche très délicate. La présente invention vise à faciliter la mise en place d'une ligne de vie et notamment permettre sa pose par une seule personne utilisant un seul dispositif et un nombre très limité d'outils.

Des dispositifs pour former des boucles sur des câbles sont par exemple connus des documents DE 202 00 805 U1 ou US 5,408,729 A1.

Des dispositifs pour mettre en place des lignes de vies sont par exemple connus des documents US 5,957,432 A1 et FR 2 857 270 A1.

A cet effet, l'invention propose un dispositif de façonnage d'une boucle sur un câble selon la revendication 1, comportant :
- des moyens de guidage du câble en forme de gouttière, comportant une partie avant et une partie arrière,
- une came d'enroulement dont l'axe est disposé au-dessus de la partie avant des moyens de guidage en vue de face, de sorte que le câble peut s'étendre dans la gouttière et au-dessous de la came d'enroulement,
- un passage de câble (53), mobile en rotation autour dudit axe (Y-Y') de la came d'enroulement (41), entre une première position dans laquelle le passage (53) est aligné avec la gouttière (40), et une seconde position dans laquelle le passage (53) est rabattu vers l'arrière de ladite gouttière (40),
- des moyens pour rabattre ledit passage de câble de ladite première position vers ladite seconde position.

Dans la première position, l'axe du passage de câble est sensiblement aligné avec la gouttière, le câble s'étend dans la gouttière et traverse le passage de câble sans tension. Dans la seconde position, le passage de câble est rabattu vers l'arrière de la gouttière et rabat le câble sur lui-même, de préférence dans la gouttière, de façon à former une boucle.

Avantageusement, le dispositif de façonnage d'une boucle peut comporter en outre des moyens de maintien du câble en position rabattue.

Avantageusement, le dispositif de façonnage d'une boucle peut comporter en outre des moyens de serre câble.

Selon l'invention le passage de câble comprend la came d'enroulement, deux biellettes mobiles en rotation autour de l'axe de la came d'enroulement par des premières extrémités, et une entretoise qui relie les secondes extrémités respectives desdites biellettes.

Le passage de câble peut prendre par exemple la forme d'une fenêtre constituée par la came d'enroulement, les deux biellettes montées pivotantes autour de l'axe de la came d'enroulement par une première extrémité et une entretoise reliant les secondes extrémités des biellettes. La came d'enroulement, par exemple un anneau, peut elle-même être fixe par rapport à la gouttière de guidage ou mobile en rotation autour de son axe, facilitant ainsi l'enroulement du câble. La came d'enroulement prend place entre des parties surélevées des flancs de la gouttière, dans sa partie avant.

Le câble est inséré dans la gouttière par sa partie arrière, ressort par sa partie avant en traversant la fenêtre. Lorsque cette fenêtre est basculée sur environ 270° vers l'arrière de la gouttière, l'entretoise appuie sur le câble, entraîne son enroulement autour de la came d'enroulement et le rabat sur lui-même à l'intérieur de la gouttière.

Avantageusement, lesdits moyens pour rabattre le passage de câble comprend un moyen de fixation coaxial à ladite came d'enroulement et comportant une tête de préhension, ledit moyen de fixation coaxial étant solidaire en rotation desdites biellettes.

Le moyen de fixation coaxial est par exemple un ensemble vis - écrou, la tête de préhension étant alors constituée par la tête de la vis, qui prend par exemple la forme d'une tête de boulon. Grâce à ces dispositions, le basculement de la fenêtre de passage de câble et donc la formation de la boucle autour de la came d'enroulement est obtenu en entraînant la vis en rotation à l'aide d'un outil adapté, par exemple une clé. La formation de la boucle est ainsi grandement facilitée car la clé procure un bras de levier important.

Avantageusement, les moyens de maintien du câble en position rabattue comprennent au moins un crochet fixé au passage de câble et qui coopère avec un moyen d'accrochage rigidement solidaire de la gouttière.

Avantageusement, ils comprennent deux crochets fixés aux secondes extrémités respectives desdites biellettes.

Une fois le câble rabattu, il doit être maintenu automatiquement en position de façon à ce que l'opérateur puisse ensuite procéder à son serrage. A cet effet, la fenêtre passage de câble peut comporter au moins un crochet, par exemple deux crochets, qui viennent en prise avec un moyen d'accrochage, par exemple un ressort à lame, de façon à le maintenir en position rabattue.

Avantageusement, les moyens de serre câble peuvent comprendre des moyens de serrage et une platine, les moyens de serrage étant aptes à appliquer la platine sur la portion de câble rabattue dans la gouttière, la platine comportant sur une de ses faces des parties saillantes qui pénètrent partiellement dans ladite gouttière lorsqu'elle est appliquée.

Grâce à ces dispositions, le câble peut être serré sur lui même et contre les parois internes de la gouttière, les parties saillantes étant conformées pour assurer une pression efficace sur les deux brins du câble.

Avantageusement, la platine peut être montée de façon imperdable sur les moyens de serrage.

Avantageusement, les moyens de serrage peuvent comprendre deux montages vis - écrou, la tête des vis étant solidaire de la gouttière de façon articulée, la platine pouvant comporter deux ouvertures permettant le passage des vis, une ouverture en forme d'encoche et une ouverture constituant un orifice.

Grâce à ces dispositions, les vis, les écrous de serrage et la platine sont imperdables. La platine est retenue par la vis qui est montée sur l'ouverture en forme d'orifice. L'autre vis est mise en place sur la platine par l'ouverture en forme d'encoche. De cette façon, l'opérateur n'a pas de petite pièce à manipuler séparément.

L'invention porte également sur un dispositif absorbeur et/ou tendeur pour ligne de vie comportant un dispositif de façonnage d'une boucle selon l'invention.

Des modes de réalisation et des variantes seront décrits ci-après, à titre d'exemples non limitatifs, avec référence aux dessins annexés dans lesquels :
Les figures 1A et 1B représentent un dispositif absorbeur - tendeur respectivement en perspective et en élévation,
Les figures 2A et 2B représentent un dispositif anti-retour pour câble qui ne fait pas partie de l'invention respectivement en perspective et en coupe verticale suivant A-A',
Les figures 3A, 3B et 3C représentent un dispositif de façonnage d'une boucle sur un câble respectivement en élévation (3A et 3B) et en perspective (3C),
La figure 3D représente en perspective une platine de serrage du dispositif de façonnage d'une boucle sur un câble,
La figure 4 représente un dispositif tendeur de câble à chariot en élévation,
Les figures 5A et 5B représentent un dispositif témoin de charge qui ne fait pas partie de l'invention respectivement en élévation et en perspective,
La figure 6 représente un dispositif absorbeur de charge impulsionnelle qui ne fait pas partie de l'invention en élévation.

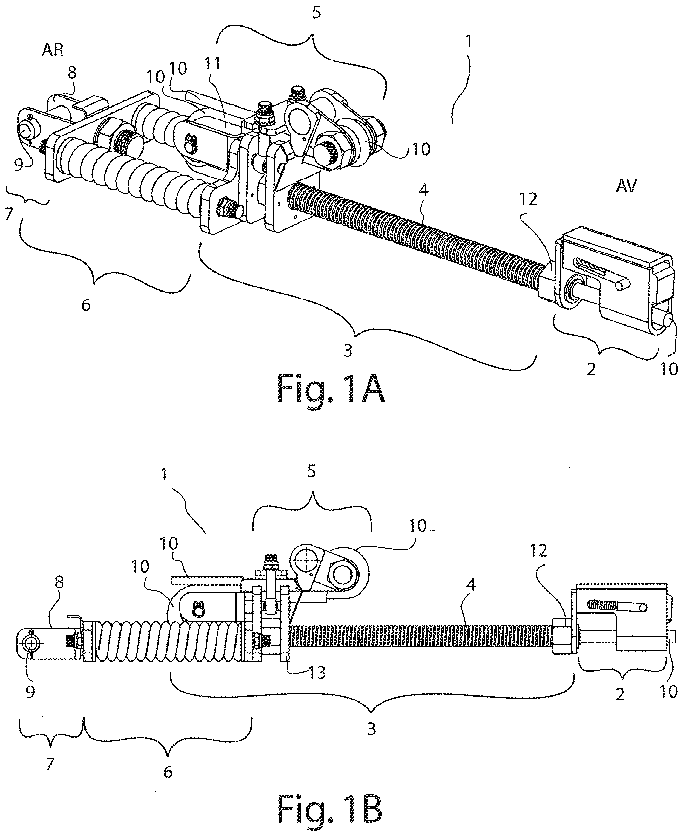

Le dispositif absorbeur - tendeur 1 illustré en figure 1 se présente sous la forme d'un corps allongé comportant d'avant AV en arrière AR, c'est à dire de droite à gauche sur la figure 1 :
- un dispositif anti-retour 2,
- un dispositif tendeur de câble à chariot 3 comportant un tube fileté 4,
- un dispositif de façonnage d'une boucle sur un câble 5,
- un ensemble absorbeur de charge impulsionnelle 6,
- un dispositif témoin de charge 7.

A son extrémité arrière, le dispositif absorbeur - tendeur 1 comporte une pièce 8 formant manille comprenant un axe 9 permettant de fixer le dispositif 1 à un point fixe d'une structure élevée.

Dans la suite du texte, les mots « avant » et « arrière » feront toujours référence à cette orientation du dispositif 1.

Le câble 10 destiné à former la ligne de vie pénètre dans le dispositif absorbeur - tendeur 1 par le dispositif anti-retour 2, traverse le tube 4, s'enroule sur 180° sur un rouleau 11, et pénètre dans le dispositif de façonnage d'une boucle 5 sur lequel il est fixé. Le câble est mis sous tension en entraînant en rotation le tube 4 par l'intermédiaire de l'écrou 12, ce qui provoque le déplacement vers l'avant du dispositif de façonnage de boucle 5 qui joue le rôle de chariot. Lorsqu'une tension prédéterminée est atteinte, le dispositif témoin de charge 7 se déclanche, avertissant l'opérateur que la tension de service est atteinte. En cas de chute d'un utilisateur relié à la ligne de vie, l'absorbeur de charge impulsionnelle 6 absorbe l'énergie cinétique de chute. Le dispositif absorbeur - tendeur 1 remplit donc plusieurs fonctions :
- façonnage d'une boucle sur le câble,
- anti-retour du câble,
- tendeur de câble,
- témoin de charge,
- absorbeur de charge impulsionnelle.

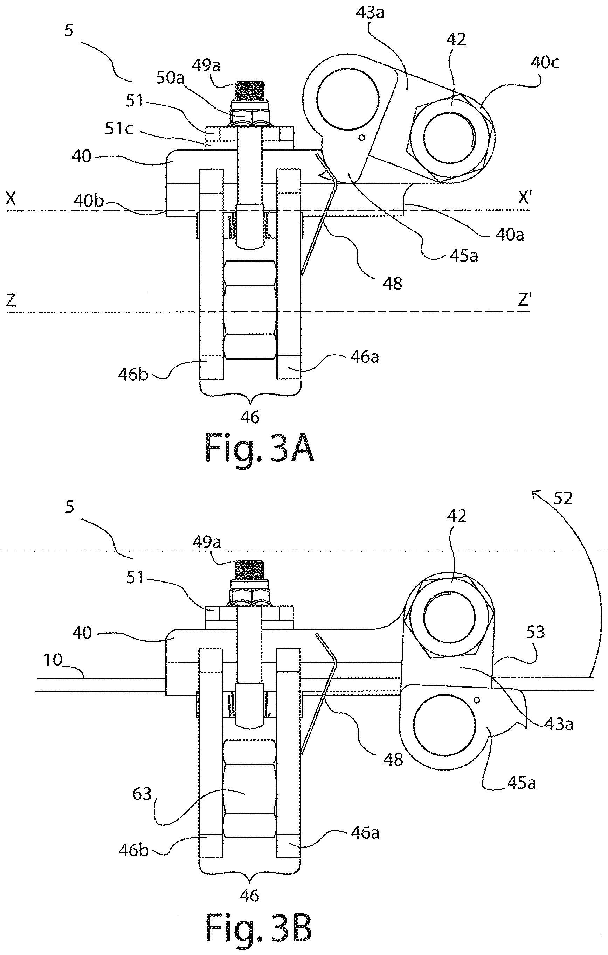

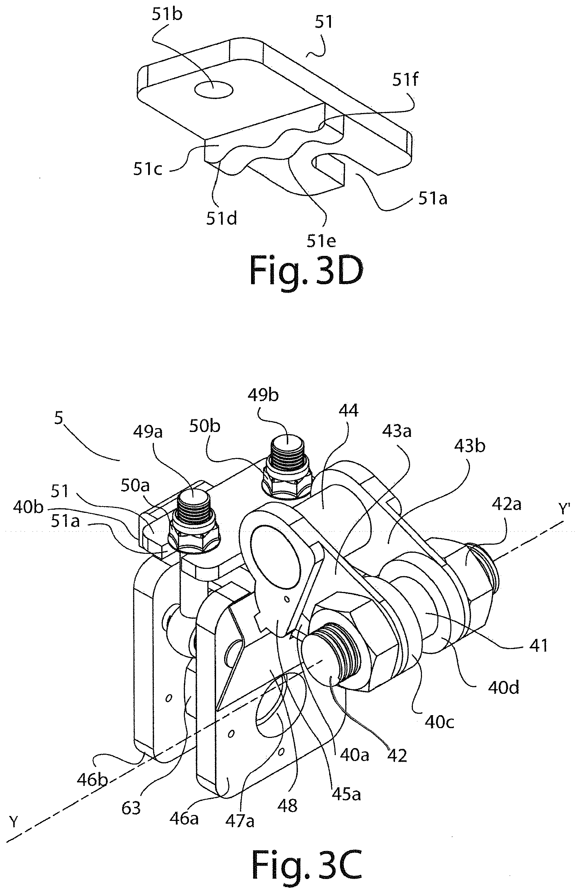

Le dispositif de façonnage d'une boucle sur un câble 5 illustré par les figures 3A à 3C comporte une gouttière 40 qui s'étend selon un axe X-X', et comportant une partie avant 40a et une partie arrière 40b. Dans sa partie avant 40a, les flancs de la gouttière 40 sont prolongés par des excroissances 40c et 40d comportant chacune une ouverture en regard l'une de l'autre. Une came d'enroulement 41 est disposée entre ces croissances 40c et 40d et dans ces ouvertures selon un axe Y-Y' orthogonal à l'axe X-X' de la gouttière 40 et au-dessus de cet axe ; elle est maintenue à cet emplacement par un moyen de fixation coaxial, par exemple un ensemble vis - écrou 42. La came 41 est préférentiellement libre en rotation autour de l'axe Y-Y', mais elle pourrait être fixe.

Le dispositif de façonnage 5 comporte en outre deux biellettes 43a et 43b parallèles montées librement mobiles en rotation autour de l'axe Y-Y' par leur première extrémité. Ces biellettes 43a et 43b sont en outre fixes par rapport à l'ensemble vis - écrou 42, de telle sorte qu'elles peuvent être actionnées en rotation par exemple par l'intermédiaire de la tête 42a de la vis.

A leur seconde extrémité distante de l'axe Y-Y', les biellettes 43a et 43b sont réunies par une entretoise 44. L'ensemble came 41, biellettes 43a et 43b et entretoise 44 forment un passage de câble 53 en forme de fenêtre sensiblement rectangulaire dans lequel un câble peut circuler.

Les biellettes 43a et 43b sont prolongées chacune à leur extrémité distante de l'axe Y-Y' par deux crochets 45a et 45b (non visible), fixes par rapport aux biellettes et qui s'étendent dans une direction sensiblement orthogonale à celle des biellettes.

La gouttière 40 est fixée en partie haute d'un support 46 qui comprend deux plaques, une plaque avant 46a et une plaque arrière 46b, parallèles et sensiblement orthogonales à l'axe X-X' de la gouttière 40. Les plaques 46a et 46b comportent chacune en partie basse une ouverture 47 d'axe Z-Z' parallèle à l'axe X-X' de la gouttière 40. La plaque avant 46a comporte sur sa face avant un ressort à lame 48 comportant deux ouvertures dans lesquelles peuvent prendre place les extrémités des crochets 45a et 45b. Grâce à ce ressort 48, les biellettes 45a et 45b et donc le passage de câble 53 peuvent être maintenus rabattus vers l'arrière de la gouttière 40.

Le dispositif de façonnage 5 comporte en outre des moyens de serrage du câble comprenant deux vis 49a et 49b, montées entre les plaques 46a et 46b et de part et d'autre de la gouttière 40, les têtes de ces vis étant articulées autour d'axes respectifs parallèles à l'axe X-X' de la gouttière. Ces vis 49a et 49b sont donc imperdables.

Les moyens de serrage comportent en outre une platine 51 sensiblement rectangulaire et deux écrous 50a et 50b montés chacun sur une vis respective. Les vis 49a et 49b traversent la platine 51 par deux ouvertures, une ouverture en forme d'encoche 51a et une ouverture en forme d'orifice 51b. Lorsque la platine 51 est montée sur la vis 49b l'écrou 50a étant en place, la platine 51 est imperdable. Comme illustré par la figure 3D, la platine 51 comporte en outre sur sa face inférieure une partie saillante ou pince 51c qui peut pénétrer entre les flancs de la gouttière 40. Cette pince 51c n'est pas lisse mais comporte un profil en forme de vague comportant trois sommets 51d, 51e et 51f afin de répartir l'effort de serrage sur le câble sur ces trois sommets.

Le dispositif est utilisé comme suit, après montage de la platine 51 sur la vis 49b :
- les biellettes 43a et 43b sont orientées vers le bas, de façon à ce que l'axe de la fenêtre de passage de câble, constituée par les biellettes 43a et 43b, l'entretoise 44 et la came d'enroulement 41, soit sensiblement aligné avec l'axe X-X' de la gouttière 40,
- le câble 10 est glissé dans la gouttière 40 par sa partie arrière 40b et ressort par sa partie avant 40a, de sorte que le câble franchisse la fenêtre de passage de câble 53 comme illustré en figure 3B,
- actionnement de l'ensemble vis - écrou 42 en rotation de façon à rabattre le passage de câble 53 vers l'arrière du dispositif 5, flèche 52 ; l'entretoise 44 appuie sur le câble 10 et ce mouvement provoque son enroulement autour de la came d'enroulement 41 et rabat le câble sur lui-même,
- encliquetage des crochets 45a et 45b dans les ouvertures du ressort à lame 48 ; le câble se trouve alors rabattu sur lui-même à l'intérieur de la gouttière 40,
- positionnement de la platine 51 au-dessus de la gouttière 40 et mise en prise de la vis 49a dans l'encoche 51a de la platine 51,
- serrage des écrous 50a et 50b ; la pince 51c pénètre entre les flancs de la gouttière 40 et appuie sur les deux brins du câble rabattus sur lui-même.

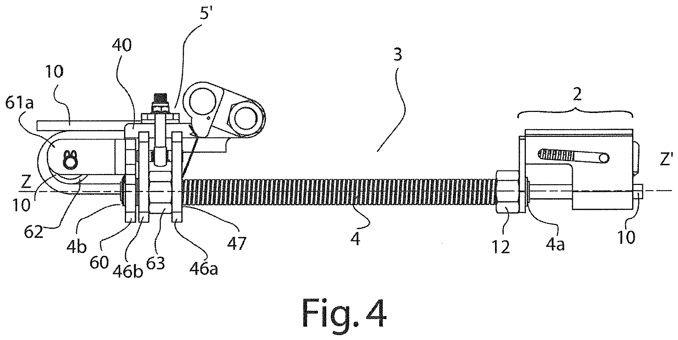

Le dispositif tendeur de câble 3 illustré en figure 4 comporte un tube 4 et moyen de support 60 comportant deux faces parallèles planes opposées, une première face sur laquelle le tube 4 est monté rotatif et une seconde face sur laquelle est disposé un moyen d'enroulement 62.

Le tube 4 est fileté et monté rotatif par son extrémité arrière sur la face avant du support 60, dans une ouverture non filetée ménagée dans ce support 60. Sur sa face arrière, le support 60 comporte deux flasques 61a et 61b (non visible) entre lesquelles un rouleau 62 est monté en rotation selon un axe sensiblement orthogonal à l'axe Z-Z' du tube 4. L'axe du rouleau 62 est situé au-dessus de l'axe Z-Z' du tube de façon que le câble 10 puisse s'enrouler sur ce rouleau lorsqu'il sort du tube.

Le dispositif tendeur de câble 3 comporte en outre un chariot 5' auquel une extrémité du câble est assujettie, apte à se déplacer le long du tube 4, entre son entrée 4a et le support 60. Dans le mode de réalisation décrit, ce chariot 5' est constitué principalement par le dispositif de façonnage d'une boucle 5 précédemment décrit, les deux dispositifs coopérant de la façon suivante : le tube 4 traverse les ouvertures 47a et 47b (non visible) ménagées dans les plaques 46a et 46b du dispositif de façonnage d'une boucle 5 ; entre les ouvertures 47a et 47b, un écrou 63 est fixé aux plaques 46a et 46b, sur lequel le tube fileté 4 est en prise.

Le tube 4 peut comporter un moyen de préhension pour sa mise en rotation, par exemple un écrou 12 fixé au tube 4 à son extrémité avant.

De cette façon, lorsque le tube 4 est mis en rotation, par exemple en actionnant l'écrou 12, le chariot 5' peut se déplacer le long du tube 4 dans un sens ou dans l'autre. La tension du câble est obtenue en déplaçant le chariot vers l'entrée 4a du tube 4.

Une alternative pour le trajet retour du câble entre le moyen d'enroulement 11 et le chariot est :
- le support 60 peut s'étendre au-dessus du tube 4 en vue de face sur une longueur inférieure ou égale au diamètre du moyen d'enroulement 62, de sorte que le passage retour du câble s'effectue au-dessus du moyen de support 60,
- le support 60 comporte une seconde ouverture traversante disposée au-dessus du moyen d'enroulement 62 en vue de face, de sorte que le passage retour du câble s'effectue au travers de cette seconde ouverture (non représenté).

Le dispositif est utilisé comme suit :
- enfiler le câble 10 dans le tube 4 par son extrémité avant,
- à la sortie du tube 4, enrouler le câble sur le rouleau 62 sur un demi tour,
- effectuer un pré-tensionnement du câble ; à cet effet, il est avantageux de disposer d'un dispositif anti-retour 2 à l'avant du tube 4,
- présenter le câble au dispositif de façonnage d'une boucle 5 - chariot 5', et façonner cette boucle comme précédemment décrit, ce qui implique une fixation du câble sur ce dispositif,
- actionner le tube 4 en rotation, de façon à provoquer le déplacement du chariot 5' vers l'avant du dispositif et par conséquent la tension du câble.

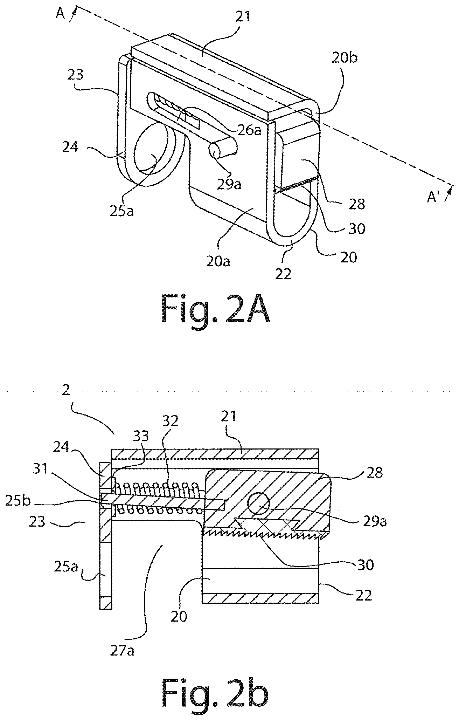

Le dispositif anti-retour 2 pour tendeur de câble 3, illustré par les figures 2A et 2B, comporte une pièce en forme de gouttière 20 dont les flancs 20a et 20b sont allongés et parallèles, fermée par un « toit » 21, à l'intérieur de laquelle le câble peut prendre place. Le dispositif 2 présente une face avant 22 et une face arrière 23, le câble pénétrant dans le dispositif 2 par la face avant 22. La partie arrière 23 du dispositif 2 comprend une plaque de fixation 24 fixée à l'extrémité arrière de la gouttière 20. Cette plaque 24 comporte une première ouverture traversante 25a colinéaire avec la gouttière 20, pour le montage du dispositif anti-retour 2 sur un tube 4 et la sortie du câble.

Les flancs 20a et 20b de la pièce 20 comportent chacun une ouverture 26a et 26b (non visible), rectiligne et inclinée vers l'avant du dispositif 2 par rapport à la gouttière 20 et, en partie arrière, une échancrure 27a et 27b (non visible). Les ouvertures 26a et 26b sont en regard l'une de l'autre.

A l'intérieur du dispositif anti-blocage 2 se trouve en outre une mâchoire formant noyau de blocage 28, de forme sensiblement parallélépipédique, qui prend place entre les flancs 20a et 20b de la gouttière 20. Le noyau de blocage 28 comporte :
- d'une part deux ergots 29a et 29b (non visible), alignés, qui s'étendent perpendiculairement à partir des faces du noyau de blocage parallèles aux flancs 20a et 20b de la gouttière 20,
- d'autre part un patin en matériau à coefficient de frottement élevé, par exemple en caoutchouc 30, cranté, fixé en queue d'aronde sur la face inférieure du noyau de blocage, tournée vers le fond de la gouttière 20. Le patin en caoutchouc 30 sert à assurer un blocage efficace du câble sans blesse ce dernier.

Chaque ergot 29a, 29b coulisse à l'intérieur d'une ouverture respective 26a, 26b. Ils maintiennent le noyau de blocage 28 à l'intérieur de la pièce en forme de gouttière 20.

Le dispositif anti-retour 2 comporte en outre un moyen de rappel situé entre les flancs de la gouttière, qui repousse le noyau de blocage dans la position de blocage. A cet effet, le noyau de blocage 28 comporte une tige 31 qui s'étend de façon sensiblement perpendiculaire à partir de sa face arrière. Cette tige 31 traverse une seconde ouverture 25b ménagée dans la plaque 24, au-dessus de la première ouverture 25a, et une rondelle 33 coaxiale. Autour de la tige 31 s'enroule un ressort 32 travaillant en compression, qui prend appui d'une part sur la face arrière du noyau de blocage 28 et d'autre part sur la plaque de fixation 24 par l'intermédiaire d'une rondelle 33. Grâce à des dispositions, le noyau de blocage 28 est maintenu repoussé vers l'avant du dispositif 2 de façon élastique. Compte tenu de l'inclinaison des ouvertures 26a et 26b, le noyau de blocage 28 se rapproche du fond de la gouttière 20 lorsqu'il se déplace vers l'avant.

Le dispositif anti-blocage comporte en conséquence deux modes de fonctionnement :
- lorsque le câble circule d'avant en arrière, le noyau de blocage 28, qui frotte sur le câble, est repoussé vers l'arrière et s'éloigne du fond de la gouttière 20 ; le câble circule normalement,
- lorsque le câble est tiré d'arrière en avant, le noyau de blocage 28 est entraîné vers l'avant et presse le câble sur le fond de la gouttière 20 par effet de coin ; le câble est bloqué. L'inclinaison des ouvertures 26a et 26b, les dimensions du noyau de blocage 28, l'épaisseur du patin 30 et le diamètre du câble utilisé sont en relation pour que ce blocage intervienne avant que les ergots 29a et 29b arrivent en bout de course.

Des alternatives aux dispositions précédentes sont par exemple :
- les ouvertures 26a et 26b peuvent être courbes,
- elles ne sont pas obligatoirement en regard l'une de l'autre, et les ergots 29a et 29b ne sont pas obligatoirement alignés, l'important étant qu'à une ouverture corresponde un ergot respectif, et que les ouvertures soient parallèles,
- les échancrures 27a et 27b, qui servent à assurer la visibilité du câble à l'intérieur du dispositif anti-blocage 2, peuvent être omises,
- un autre mode de fixation du patin 30 est possible, tel qu'un collage,
- le noyau de blocage 28 peut être maintenu repoussé vers l'avant du dispositif 2 par un autre moyen élastique, tel qu'un ressort à lame.

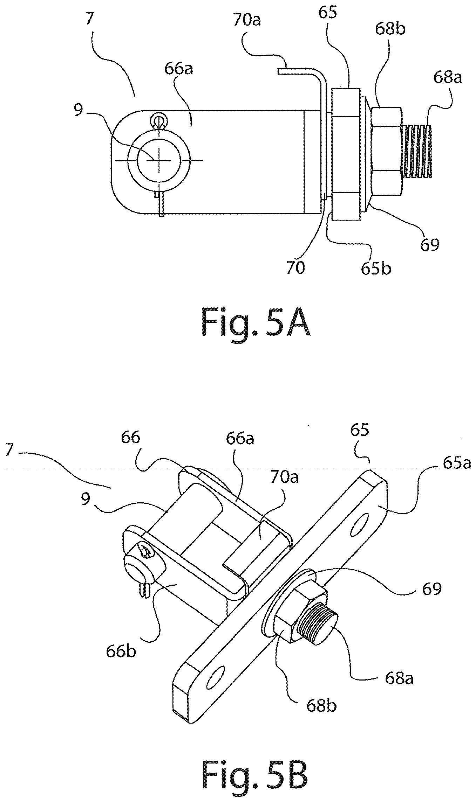

Le dispositif témoin de charge 7 pour tendeur de câble 3, illustré en figures 5A et 5B, comporte un premier élément constitué d'une plaque 65, comportant une face avant 65a et une face arrière 65b. Le dispositif témoin 7 peut être fixé par exemple à un dispositif de mise en tension d'un câble, tel que le dispositif tendeur de câble 3 déjà décrit, par cette plaque 65. Le dispositif témoin 7 comprend un second élément constitué d'une pièce 66 en forme de cavalier ou de manille. Ce cavalier comporte deux branches sensiblement parallèles 66a et 66b reliées par une portion sensiblement plane 66c. Les branches 66a et 66b comportent des ouvertures permettant de recevoir un axe 9 pour la fixation du dispositif par exemple au point fixe d'une structure élevée.

La plaque 65 et la portion 66c du cavalier 66 comportent chacun une ouverture, et sont fixés l'une à l'autre par un ensemble vis - écrou 68a et 68b traversant ces ouvertures. Le dispositif témoin 7 comporte en outre une rondelle conique 69 dont la pression d'écrasement est calibrée, par exemple une rondelle Belleville, montée sur la vis 68a, entre l'écrou 68b et la plaque 65 dans l'exemple illustré en figures 5A et 5B, mais elle pourrait être montée entre la tête de la vis 68a et la portion 66c du cavalier 66.

Entre le cavalier 66 et la plaque 65 se trouve une rondelle témoin 70 également traversée par la vis 68a, pouvant prendre la forme d'une plaquette comportant un rebord 70a parallèle à la vis 68a, bien visible de l'utilisateur du dispositif témoin 7.

Le dispositif témoin de charge 7 est par exemple installé entre un point fixe relié à l'axe 9 et un tendeur de câble relié à la plaque 65. Lorsque l'utilisateur exerce une tension sur le câble, cette tension se traduit par une pression exercée sur la rondelle conique 69. Lorsque la tension atteint une certaine valeur, la rondelle conique s'écrase brusquement, ce qui provoque un jeu entre la plaque 65 et le cavalier 66 et ce qui libère la rondelle témoin 70 autour de la vis 68a. L'utilisateur peut être ainsi averti qu'il a atteint une tension suffisante sur le câble.

Le dispositif n'est pas limité à l'usage d'une seule rondelle conique : plusieurs rondelles peuvent être montées en série sur la même vis, et/ou en parallèle sur plusieurs vis.

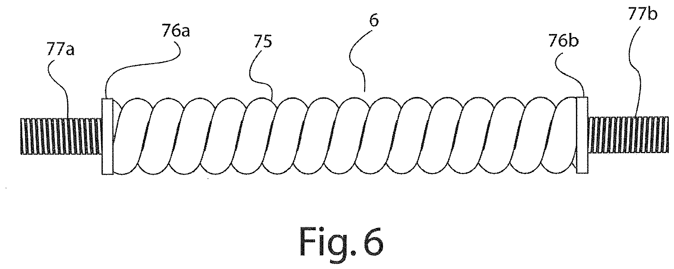

Le dispositif absorbeur de charge impulsionnelle 6 pour tendeur de câble 3, illustré par la figure 6, comporte un enroulement 75 de matériau déformable, par exemple de l'acier doux, donc les spires sont jointives. A chacune de ses extrémités cet enroulement comporte un moyen de fixation comprenant :
- une platine 76a, 76b de même diamètre que l'enroulement 75, fixée à une extrémité respective de l'enroulement par exemple par soudage,
- une vis 77a, 77b, fixée à une platine respective, qui s'étend dans la même direction que l'enroulement.

## Revendications

1. Dispositif de façonnage (5) d'une boucle sur un câble (10), comportant :
- des moyens de guidage du câble comportant une gouttière (40) qui s'étend selon un axe de gouttière (X-X'), ladite gouttière comportant une partie avant (40a) et une partie arrière (40b),
- une came d'enroulement (41) comportant un axe d'enroulement (Y-Y') orthogonal audit axe de gouttière, ladite came étant disposée au-dessus de la partie avant (40a) de ladite gouttière (40), entre des parties surélevées de flancs de ladite gouttière, de sorte que le câble peut s'étendre dans la gouttière (40) et au-dessous de la came d'enroulement,
- deux biellettes (43a, 43b) parallèles montées librement mobiles en rotation autour de l'axe d'enroulement (Y-Y') par une première de leurs extrémités, leurs secondes extrémités, distantes dudit axe d'enroulement, étant réunies par une entretoise (44),
- un passage de câble (53), formé par ladite came (41), lesdites biellettes (43a,43b) et ladite entretoise (44), mobile en rotation autour dudit axe d'enroulement (Y-Y') de la came d'enroulement (41), entre une première position dans laquelle le passage (53) est sensiblement aligné avec l'axe (X-X') de la gouttière (40) et dans laquelle le câble peut être inséré dans ledit passage, et une seconde position dans laquelle le passage (53) est rabattu vers l'arrière de ladite gouttière (40),
- des moyens pour rabattre ledit passage de câble de ladite première position vers ladite seconde position de sorte que ladite boucle est formée sur ledit câble, autour de ladite came d'enroulement (41).

2. Dispositif de façonnage (5) d'une boucle sur un câble selon la revendication 1,
**caractérisé en ce qu'**il comporte en outre des moyens de maintien du câble en position rabattue.

3. Dispositif de façonnage (5) d'une boucle sur un câble selon l'une des revendications 1 et 2,
**caractérisé en ce qu'**il comporte en outre des moyens de serre câble.

4. Dispositif de façonnage (5) d'une boucle sur un câble selon l'une des revendications 1 à 3,
**caractérisé en ce que** lesdits moyens pour rabattre le passage de câble comprennent un moyen de fixation coaxial (42) à ladite came d'enroulement (41) et comportant une tête de préhension (42a), ledit moyen de fixation coaxial (42) étant solidaire en rotation desdites biellettes (43a, 43b).

5. Dispositif de façonnage (5) d'une boucle sur un câble selon l'une des revendications 2 à 4,
**caractérisé en ce que** les moyens de maintien du câble en position rabattue comprennent au moins un crochet (45a, 45b) fixé au passage de câble et qui coopère avec un moyen d'accrochage (48) rigidement solidaire de la gouttière (40).

6. Dispositif de façonnage (5) d'une boucle sur un câble selon la revendication 5,
**caractérisé en ce que** les moyens de maintien du câble en position rabattue comprennent deux crochets (45a, 45b) fixés aux secondes extrémités respectives desdites biellettes (43a, 43b).

7. Dispositif de façonnage (5) d'une boucle sur un câble selon l'une des revendications 5 et 6, **caractérisé en ce que** le moyen d'accrochage comprend un ressort à lame (48).

8. Dispositif de façonnage (5) d'une boucle sur un câble selon l'une des revendications 3 et 4 à 7 en ce qu'elles dépendent de la revendication 3,
**caractérisé en ce que** les moyens de serre câble comprennent des moyens de serrage et une platine (51), les moyens de serrage étant aptes à appliquer la platine sur la portion de câble rabattue dans la gouttière, la platine comportant sur une de ses faces une partie saillante (51c) qui pénètre partiellement dans ladite gouttière (40) lorsqu'elle est appliquée.

9. Dispositif de façonnage (5) d'une boucle sur un câble selon la revendication 8,
**caractérisé en ce que** la partie saillante (51c) comporte un profil en forme de vague comportant trois sommets (51d, 51e, 51f).

10. Dispositif de façonnage (5) d'une boucle sur un câble selon l'une des revendications 8 et 9,
**caractérisé en ce que** ladite platine (51) est montée de façon imperdable sur les moyens de serrage.

11. Dispositif de façonnage (5) d'une boucle sur un câble selon la revendication 10,
**caractérisé en ce que** les moyens de serrage comportent deux montages vis - écrou (49a, 50a et 49b, 50b), les têtes de vis étant solidaires de la gouttière (40) de façon articulée, la platine (51) comportant deux ouvertures (51a, 51b) pour le passage des vis, une ouverture en forme d'encoche (51a) et une ouverture constituant un orifice (51b).

12. Dispositif absorbeur et/ou tendeur de câble (1), notamment pour ligne de vie, comportant un dispositif de façonnage (5) d'une boucle selon l'une quelconque des revendications précédentes.

## Patentansprüche

1. Vorrichtung (5) zur Formung einer Kabelschleife (10), umfassend:
- eine Kabelführungseinrichtung mit einer Rinne (40), die sich entlang einer Rinnenachse (X-X) erstreckt, wobei die Rinne einen vorderen Abschnitt (40a) und einen hinteren Abschnitt (40b) hat,
- einen Wickelnocken (41) mit einer zur Rinnenachse orthogonalen Wickelachse (Y-Y'), wobei der Nocken über dem vorderen Abschnitt (40a) der Rinne (40) zwischen erhöhten Seitenwandbereichen der Rinne derart angeordnet ist, dass sich das Kabel in der Rinne (40) und unter dem Wickelnocken erstrecken kann,
- zwei parallele Schwingarme (43a, 43b), die mit einem ersten ihrer Enden um die Wickelachse (Y-Y') frei drehbar montiert sind, wobei ihre von der Wickelachse entfernten zweiten Enden durch ein Zwischenstück (44) vereint sind,
- einen Kabeldurchlass (53), der durch den Nocken (41), die Schwingarme (43a, 43b) und das Zwischenstück (44) gebildet ist und um die Wickelachse (Y-Y') des Wickelnockens (41) drehbar ist zwischen einer ersten Position, in der der Durchlass (53) im Wesentlichen mit der Achse (X-X') der Rinne (40) ausgerichtet ist und in der das Kabel in den Durchlass (53) eingeführt werden kann, und einer zweiten Position, in der der Durchlass in Richtung zur Rückseite der Rinne (40) umgeklappt ist,
- Mittel zum Umklappen des Kabeldurchlasses von der ersten Position in Richtung auf die zweite Position derart, dass um den Wickelnocken (41) die Kabelschleife gebildet wird.

2. Vorrichtung (5) zur Formung einer Kabelschleife nach Anspruch 1,
**dadurch gekennzeichnet, dass** diese ferner Mittel zum Halten des Kabels in der umgebogenen Position umfasst.

3. Vorrichtung (5) zur Formung einer Kabelschleife nach einem der Ansprüche 1 und 2,
**dadurch gekennzeichnet, dass** diese ferner eine Kabelklemmeinrichtung umfasst.

4. Vorrichtung (5) zur Formung einer Kabelschleife nach einem der Ansprüche 1 bis 3,
**dadurch gekennzeichnet, dass** die Mittel zum Umklappen des Kabeldurchlasses Befestigungsmittel (42) umfassen, die koaxial zu dem Wickelnocken (41) angeordnet sind und einen Greifkopf (42a) aufweisen, wobei die koaxialen Befestigungsmittel (42) mit den Schwingarmen (43a, 43b) drehfest ausgebildet sind.

5. Vorrichtung (5) zur Formung einer Kabelschleife nach einem der Ansprüche 2 bis 4,
**dadurch gekennzeichnet, dass** die Mittel zum Halten des Kabels in der umgebogenen Position mindestens einen Haken (45a, 45b) umfassen, der an dem Kabeldurchlass befestigt ist und mit einem Verankerungsmittel (48) zusammenwirkt, das mit der Rinne (40) starr verbunden ist.

6. Vorrichtung (5) zur Formung einer Kabelschleife nach Anspruch 5,
**dadurch gekennzeichnet, dass** die Mittel zum Halten des Kabels in der umgebogenen Position zwei Haken (45a, 45b) umfassen, die an den jeweiligen zweiten Enden der Schwingarme (43a, 43b) befestigt sind.

7. Vorrichtung (5) zur Formung einer Kabelschleife nach einem der Ansprüche 5 und 6,
**dadurch gekennzeichnet, dass** die Verankerungsmittel eine Blattfeder (48) umfassen.

8. Vorrichtung (5) zur Formung einer Kabelschleife nach einem der Ansprüche 3 und 4 bis 7, soweit abhängig von Anspruch 3,
**dadurch gekennzeichnet, dass** die Kabelklemmvorrichtung Klemmmittel und eine Platte (51) umfasst, wobei die Klemmvorrichtung geeignet ist zum Anlegen der Platte an den umgebogenen Kabelabschnitt in der Rinne, wobei die Platte auf einer ihrer Seiten einen vorspringenden Bereich (51c) hat, der bei angelegter Platte teilweise in die Rinne (40) eindringt.

9. Vorrichtung (5) zur Formung einer Kabelschleife nach Anspruch 8,
**dadurch gekennzeichnet, dass** der vorspringende Bereich (51c) ein Wellenprofil mit drei Wellenspitzen (51d, 51e, 51f) aufweist.

10. Vorrichtung (5) zur Formung einer Kabelschleife nach einem der Ansprüche 8 und 9,
**dadurch gekennzeichnet, dass** die Platte (51) unverlierbar an der Klemmvorrichtung montiert ist.

11. Vorrichtung (5) zur Formung einer Kabelschleife nach Anspruch 10,
**dadurch gekennzeichnet, dass** die Klemmvorrichtung zwei SchraubenMutter-Halterungen (49a, 50a und 49b, 50b) aufweist, wobei die Schraubenköpfe mit der Rinne (40) gelenkig verbunden sind, wobei die Platte (51) zwei Öffnungen (51a, 51b) für den Durchtritt der Schrauben hat, wovon eine Öffnung die Form einer Kerbe (51a) aufweist und eine Öffnung ein Loch (51b) bildet.

12. Kabelaufnahme- und/oder Spannvorrichtung (1), insbesondere für eine Rettungsleine, umfassend eine Vorrichtung (5) zur Formung einer Schleife nach einem der vorangehenden Ansprüche.

## Claims

1. Device (5) for fashioning a loop on a cable (10), comprising:
- means for guiding the cable, comprising a channel (40) that extends along a channel axis (X-X'), said channel comprising a front part (40a) and a rear part (40b),
- a winding cam (41) comprising a winding axis (Y-Y') orthogonal to said channel axis, said cam being disposed above the front part (40a) of said channel (40), between raised parts of sides of said channel, so that the cable can extend in the channel (40) and below the winding cam,
- two parallel linkages (43a, 43b) mounted so as to be able to rotate freely about the winding axis (Y-Y') by a first of their ends, their second ends, distant from said winding axis, being joined by a strut (44),
- a cable passage (53), formed by said cam (41), said linkages (43a, 43b) and said strut (44), able to rotate about said winding axis (Y-Y') of the winding cam (41), between a first position in which the passage (53) is substantially aligned with the axis (X-X') of the channel (40) and in which the cable can be inserted in said passage, and a second position in which the passage (53) is folded towards the rear of said channel (40),
- means for folding said cable passage from said first position to said second position so that said loop is formed on said cable, around said winding cam (41).

2. Device (5) for fashioning a loop on a cable according to claim 1, **characterised in that** it further comprises means for holding the cable in the folded position.

3. Device (5) for fashioning a loop on a cable according to either claim 1 or claim 2, **characterised in that** it further comprises cable-clamping means.

4. Device (5) for fashioning a loop on a cable according to any of claims 1 to 3, **characterised in that** said means for folding over the cable passage comprise a coaxial means (42) for fixing to said winding cam (41) and comprising a gripping head (42a), said coaxial fixing means (42) being constrained to rotate with said linkages (43a, 43b).

5. Device (5) for fashioning a loop on a cable according to any of claims 2 to 4, **characterised in that** the means for holding the cable in the folded position comprise at least one hook (45a, 45b) fixed to the cable passage and which cooperates with an attachment means (48) rigidly secured to the channel (40).

6. Device (5) for fashioning a loop on a cable according to claim 5, **characterised in that** the means for holding the cable in the folded position comprise two hooks (45a, 45b) fixed to the respective second ends of said linkages (43a, 43b).

7. Device (5) for fashioning a loop on a cable according to either claim 5 or claim 6, **characterised in that** the attachment means comprises a leaf spring (48).

8. Device (5) for fashioning a loop on a cable according to any of claims 3 and 4 to 7 insofar as they are dependent on claim 3, **characterised in that** the cable-clamping means comprise clamping means and a plate (51), the clamping means being able to apply the plate to the portion of cable folded in the channel, the plate comprising, on one of the faces thereof, a projecting part (51c) that partially enters said channel (40) when it is applied.

9. Device (5) for fashioning a loop on a cable according to claim 8, **characterised in that** the projecting part (51c) comprises a profile in the form of a wave comprising three crests (51d, 51e, 51f).

10. Device (5) for fashioning a loop on a cable according to either claim 8 or claim 9, **characterised in that** said plate (51) is mounted captive on the clamping means.

11. Device (5) for fashioning a loop on a cable according to claim 10, **characterised in that** the clamping means comprise two screw and nut assemblies (49a, 50a and 49b, 50b), the screw heads being secured to the channel (40) in an articulated fashion, the plate (51) comprising two openings (51a, 51b) for the screws to pass, an opening in the form of a notch (51a) and an opening constituting an orifice (51b).

12. A device for absorbing and/or tensioning a cable (1), in particular for a lifeline, comprising a device (5) for fashioning a loop according to any of the preceding claims.
